# EUROPÄISCHE PATENTSCHRIFT

(11) **EP 1 109 100 B1**
(45) Veröffentlichungstag und Bekanntmachung des Hinweises auf die Patenterteilung: **17.10.2012**
(21) Anmeldenummer: 00127173.3
(22) Anmeldetag: 12.12.2000
(51) Int. Cl.: G06F 11/14, G06F 9/445

(54) **Verfahren zur Abarbeitung eines Daten-Ladeauftrags in einem Daten ver- und/oder bearbeitenden System**
Procedure for the processing of a batch-job in a data processing system
Procédure de traitement par lots dans un système de traitement de données

(30) Priorität: 17.12.1999 DE 19960985
(43) Veröffentlichungstag der Anmeldung: 20.06.2001
(73) Patentinhaber: Tenovis GmbH & Co. KG, 60362 Frankfurt (DE)
(72) Erfinder: Kalunka, Berthold, 61231 Bad Nauheim (DE)
(74) Vertreter: Tergau & Walkenhorst

(56) Entgegenhaltungen:
- EP-A- 0 687 975
- EP-A- 0 848 341
- EP-A- 1 001 339
- US-A- 5 754 785
- US-A- 5 956 480
- "INSTALLATION EVENT MACHINE" IBM TECHNICAL DISCLOSURE BULLETIN, IBM CORP. NEW YORK, US, Bd. 38, Nr. 4, 1. April 1995 (1995-04-01), Seiten 519-520, XP000516240 ISSN: 0018-8689

## Beschreibung

Die Erfindung betrifft ein Verfahren zur Abarbeitung eines Daten-Ladeauftrags gemäß Oberbegriff des Anspruch 1.

### Stand der Technik

Ein Verfahren zur Abarbeitung eines Daten-Ladeauftrags, der auch als Batch-Job bezeichnet wird, ist bekannt. Dabei ist vorgesehen, dass der Ladeauftrag anhand einer sogenannten Ladeliste abgearbeitet wird, in der zumindest die Systemkomponente aufgelistet ist, die die zu ladenden Daten erhalten soll, und in der die zu ladende Datenkomponente beschrieben ist. Derartige Ladeaufträge werden beispielsweise in einem Computer, insbesondere Computer-Netzwerk, ausgeführt. Dabei kann vorgesehen sein, dass neue oder aktualisierte Software an einzelne Systemkomponenten beziehungsweise Netzelemente übermittelt werden soll. Selbstverständlich können lediglich auch Daten übermittelt werden, die bei der Abarbeitung bestehender Programme benötigt werden. Denkbar wäre es auch, mit derartigen Daten-Ladeaufträgen Dienstprogramme ablaufen zu lassen. So kann beispielsweise vorgesehen sein, dass mittels eines derartigen Ladeauftrags in einem System der hier angesprochenen Art eine Datensicherung von gespeicherten Daten gestartet wird. Selbstverständlich können auch andere Dienstprogramme abgearbeitet beziehungsweise gestartet werden, die mit einem Daten-Ladeauftrag ausgeführt werden sollen. Unter Daten werden also im Zusammenhang mit dieser Anmeldung Softwarekomponenten, Dienstprogramme, Daten, Statusangaben oder dergleichen verstanden.

Die EP 0687975 beschreibt ein Verfahren zur Abarbeitung eines Datenladeauftrags in einem datenverarbeitenden System, wobei die Abarbeitung anhand einer Ladeliste erfolgt, die zumindest die den Ladeauftrag enthaltende Systemkomponente und die zu ladende Datenkomponente enthält. Dabei wird die Ladeliste vor oder während der Abarbeitung des Datenladeauftrags in einem nicht flüchtigen Speicher zwischengespeichert. Die EP 1001339 offenbart ein Verfahren zur Installation eines einzigen Softwarepaketes auf einem einzigen Zielsystem, wobei das Softwarepaket aus mehreren Softwarekomponenten besteht.
Die Softwarekomponentenliste wird anhand eines Pointers abgearbeitet und erst nach vollständiger Installation gelöscht.

Nachteilig bei dieser Art der Abarbeitung von Batch-Jobs ist, dass beim Auftreten eines Fehlers die gerade abgearbeitete Ladeliste, also der Ladeauftrag, möglicherweise nicht oder nur unvollständig ausgeführt wird, so dass die zu ladende Datenkomponente in die dafür vorgesehene Systemkomponente nicht übertragen wird. Dadurch kann es zu Fehlfunktionen kommen. Es entstehen jedoch auch Wartezeiten, da beispielsweise für Benutzer ungewiss ist, ob der Ladeauftrag ordnungsgemäß ausgeführt wurde oder nicht. Um sicher zu gehen, musste dann der Ladeauftrag nochmals gestartet werden. Es ergeben sich also Wartezeiten, in denen möglicherweise die Systemkomponente ohne Daten, also funktionslos ist. Insbesondere ist dies nachteilig, wenn derartige Ladeaufträge außerhalb der Benutzungszeiten, also beispielsweise nachts, automatisch ausgeführt werden sollen. Tritt während dieser Zeit eine Fehlfunktion auf, kann bei der nächsten Benutzungszeit nicht mit Sicherheit gesagt werden, ob die Ladeaufträge auch tatsächlich ausgeführt wurden. Es können also aufwendige Überprüfungen notwendig werden.

Ein vorteilhaffes Verfahren weist demgegenüber den Vorteil auf, dass Gewissheit besteht, ob die angefallenen Ladeaufträge tatsächlich ausgeführt wurden. Dadurch, dass die Ladeliste, also der Daten-Ladeauftrag, in einem nicht flüchtigen Speicher zwischengespeichert wird, und erst nach vollständiger Abarbeitung des Ladevorgangs aus diesem Speicher entfernt wird, kann sehr leicht nachgeprüft werden, ob die Abarbeitung des Ladeauftrags erfolgt ist. So ist es beispielsweise in vorteilhafter Weise möglich, in diesem nicht flüchtigen Speicher "nachzusehen", ob eine Ladeliste noch zwischengespeichert ist oder bereits entfernt wurde, da die Abarbeitung des zugehörigen Ladeauftrags erfolgte. Hätte der Ladeauftrag ausgeführt werden sollen, befindet sich die Ladeliste jedoch noch zwischengespeichert, so kann der Ladeauftrag manuell oder automatisch neu gestartet werden. Es wird mit dem erfindungsgemäßen Verfahren also verhindert, dass Ungewissheit über den Ladezustand der Systemkomponente besteht.

Bevorzugt wird jedoch nicht die komplette Ladeliste zwischengespeichert, sondern für die Ladeliste wird ein Name, vorzugsweise Dateiname, vergeben, der dann zwischengespeichert wird. Ist der Ladeauftrag ausgeführt, wird der Name der Ladeliste aus dem Zwischenspeicher gelöscht.

Um sicher zu gehen, dass nach einer Fehlfunktion, beispielsweise ein Spannungsausfall, einer Systemkomponente der Ladeauftrag auch tatsächlich vollständig ausgeführt wird, ist in einer Weiterbildung der Erfindung vorgesehen, dass der Ladeauftrag so oft automatisch abgearbeitet beziehungsweise gestartet wird, bis er ein einziges Mal vollständig ausgeführt wurde. Tritt beispielsweise während der Abarbeitung des Ladeauftrags ein Fehler in einer Systemkomponente auf, beispielsweise ein Spannungsausfall und anschließendes Wiedereinschalten der Energiezufuhr, so kann automatisch in dem nicht flüchtigen Speicher nachgeschaut werden, ob die Ladeliste beziehungsweise der zugehörige Name noch zwischen-gespeichert ist oder nicht. Ist sie noch zwischen-gespeichert, wird der Ladeauftrag automatisch nochmals gestartet, also die Ladeliste nochmals abgearbeitet. Dieser Vorgang wiederholt sich so oft, bis der Ladeauftrag einmal vollständig ausgeführt ist, so dass er anschließend aus der Zwischenspeicherung entfernt werden kann. Somit ist beim erfindungsgemäßen Verfahren sichergestellt, dass Ladeaufträge auch tatsächlich ausgeführt werden und die Systemkomponente, der die Datenkomponente zugeführt werden soll, diese auch tatsächlich erhalten hat.

Enthält die Ladeliste auch einen Startzeitpunkt für den Ladeauftrag, kann dieser auch außerhalb der Benutzungszeiten des Systems automatisch ausgeführt werden. Auch dabei wird erreicht, dass der Ladeauftrag so oft abgearbeitet wird, bis er ein einziges Mal vollständig ausgeführt wurde. Bei der nächsten Benutzungszeit ist damit gewährleistet, dass die Systemkomponenten die erforderlichen Daten, also beispielsweise Software oder dergleichen, auch tatsächlich erhalten hat und somit mit diesen Daten arbeiten kann.

Bei einem bevorzugten Ausführungsbeispiel ist vorgesehen, dass die Ladeliste beziehungsweise deren Name in eine Auftragsliste übertragen wird, wobei die Auftragsliste in dem nicht flüchtigen Speicher abgelegt wird. Werden mehrere Ladelisten mit ihrem jeweiligen Namen an diese Auftragsliste übertragen, kann auf einfache Art und Weise Gewissheit darüber erlangt werden, welche Ladelisten abgearbeitet wurden, da in der Auftragsliste lediglich die Ladeaufträge noch vorhanden sind, die noch nicht ausgeführt wurden. Wird ein Ladeauftrag vollständig ausgeführt, wird er aus dieser Auftragsliste entfernt.

Bevorzugt werden die Ladelisten in Abhängigkeit ihres Startzeitpunkts in der Auftragsliste einsortiert. Sie können somit zeitabhängig ausgelesen werden, um die Ladelisten zum geforderten Startzeitpunkt abzuarbeiten. Die Ladelistenverwaltung ist somit überschaubar. Selbstverständlich können die Ladelisten auch nach anderen Kriterien einsortiert werden.

Bei einem besonders bevorzugten Ausführungsbeispiel ist das System in ein Netzwerk eingebunden, das zumindest zwei Netzelemente aufweist, wobei das erste Netzelement die den Ladeauftrag erhaltende Systemkomponente ist und das zweite Netzelement die den Ladeauftrag abarbeitende Systemkomponente bildet. Somit kann von dem zweiten Netzelement aus die Datenkomponente an das erste Netzelement übermittelt werden. Dieses erste Netzelement kann beispielsweise ein Terminal eines Gesamtsystems sein, wobei dieses Terminal an eine Zentraleinheit angeschlossen ist, die das zweite Netzelement bildet.

Bevorzugt arbeitet das System als Telekommunikationsanlage, wobei das erste Netzelement beispielsweise eine Nebenstellenanlage ist.

Bei einem bevorzugten Ausführungsbeispiel weist das System ein drittes Netzelement auf, in dem die Ladeliste erstellt wird. Die Ladeliste kann unmittelbar vor dem Start des Ladeauftrags an das zweite Netzelement übermittelt werden. Diese kann jedoch auch unmittelbar nach Erstellen an das zweite Netzelement übermittelt werden. Die Ladeliste beziehungsweise deren Name wird im zweiten Netzelement in der Auftragsliste gespeichert. Erfolgt die Übertragung der Ladeliste an das zweite Netzelement unmittelbar vor dem Start des Ladeauftrags, wird gleichzeitig die Ladeliste oder deren Namen in der Auftragsliste zwischengespeichert. Nach Abarbeitung des Ladeauftrags wird die Auftragsliste aktualisiert, also die abgearbeitete Ladeliste beziehungsweise der zugehörige Name entfernt.

Zusammen mit der Ladeliste kann die zu ladende Datenkomponente von dem dritten Netzelement an das zweite Netzelement übermittelt werden. Es kann jedoch auch vorgesehen sein, dass in dem zweiten Netzelement die zu ladende Datenkomponente bereits gespeichert ist, also von dort aus an das erste Netzelement übermittelt wird.

In einer Weiterbildung der Erfindung ist vorgesehen, dass in dem zweiten Netzelement die Ladeauftragsverwaltung und die Auftragsausgabe erfolgen. Das heißt, dass die Ladeauftragsverwaltung entsprechend den in den einzelnen Ladelisten vorgegebenen Startzeitpunkten entscheidet, welcher Ladeauftrag abgearbeitet werden muss, und dass von dem zweiten Netzelement aus die zu ladende Datenkomponente an das erste Netzelement übermittelt wird. Die Auftragsausgabe erfolgt also aus dem zweiten Netzelement.

Um auf einfache Art und Weise die Auftragsliste zu aktualisieren, ist vorgesehen, dass die Ladeauftragsverwaltung der Auftragsausgabe die abzuarbeitende Ladeliste zuweist, so dass also dann die zu ladende Datenkomponente ausgegeben werden kann, worauf die Auftragsausgabe nach vollständiger Abarbeitung des Ladeauftrags dies der Ladeauftragsverwaltung zurückmeldet, so dass dann die Ladeauftragsverwaltung die abgearbeitete Ladeliste oder deren Namen aus der Auftragsliste entfernen kann.

Die Erfindung wird anhand der Merkmale des Umabhängigen Anspruchs 1 beschrieben

Weitere Ausgestaltungen ergeben sich aus den Unteransprüchen.

### Zeichnung

Die Erfindung wird nachfolgend anhand von Ausführungsbeispielen mit Bezug auf die Zeichnung näher erläutert. Es zeigen:
- Figur 1: anhand eines Blockschaltbilds ein Verfahren zur Abarbeitung des Daten-Ladeauftrags,
- Figur 2: anhand eines Blockschaltbilds eine automatische Abarbeitung eines Ladeauftrags.

### Beschreibung der Ausführungsbeispiele

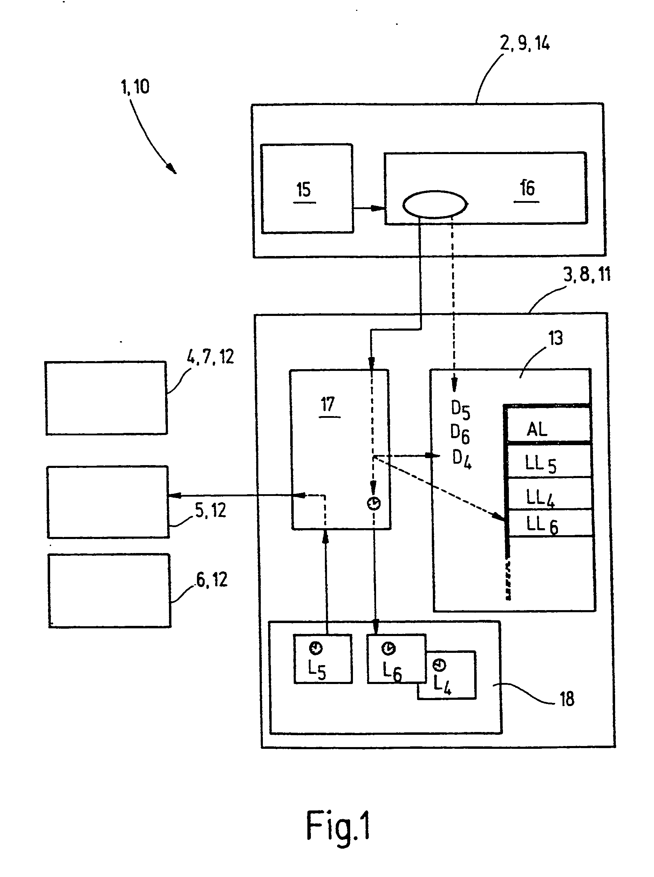

Figur 1 zeigt ein Daten ver- und/oder bearbeitendes System, das im Folgenden lediglich als System 1 bezeichnet wird. Das System weist mehrere Systemkomponenten 2, 3, 4, 5 und 6 auf, die über ein hier nicht näher dargestelltes Netzwerk miteinander verbunden sind. Somit bilden die Systemkomponenten 2, 3, 4, 5, 6 Netzelemente, wobei die Systemkomponente 4 ein erstes Netzelement 7 bildet. Die Systemkomponente 3 ist ein zweites Netzelement 8; die Systemkomponente 2 bildet ein drittes Netzelement 9.

Bevorzugt ist das System 1 als Telekommunikationsanlage 10 realisiert, bei dem das dritte Netzelement 9 ein sogenannter Service-PC 14 ist. Das zweite Netzelement 8 bildet die Zentraleinheit 11 der Telekommunikationsanlage 10. Das erste Netzelement 7 kann eine Nebenstelle 12 sein. Die Systemkomponenten 5 und 6 können ebenfalls als Nebenstelle 12 ausgebildet sein.

In Figur 1 ist dargestellt, dass ein Ladeauftrag L₅ für die Systemkomponente 5 gerade aktiv ist, also eine Datenkomponente D₅ gerade an die Systemkomponente 5 übertragen wird. In der Zentraleinheit 11 ist in einem nicht flüchtigen Speicher 13 eine Auftragsliste AL erstellt, in der Ladelisten einsortiert sind. Bevorzugt werden in dem Speicher 13 lediglich die den Ladelisten zugewiesenen Namen LL gespeichert. In dem Speicher 13 können auch verschiedene Datenkomponenten D₄ bis D₅ gespeichert sein, die an die Systemkomponenten 4 bis 6 übertragen werden sollen.

In der Systemkomponente 2, also dem Service-PC 14, werden die Ladeaufträge für die Systemkomponenten 4, 5, 6 in einem Verfahrensschritt 15 vorbereitet. Dabei werden die Ladelisten, vorzugsweise mit zugehörigem Namen LL₄ bis LL₆, erstellt. Die auch als Download bezeichneten Ladeaufträge werden dann in einem Verfahrensschritt 16 vom Service-PC 14 an eine Auftragsausgabe 17 der Zentraleinheit 11 übertragen. Die jeweiligen Startzeitpunkte für die Ladeaufträge L₄ bis L₆ werden aus den Ladelisten ausgelesen. Außerdem werden die Namen LL₄ bis LL₆ der Ladelisten in die Auftragsliste AL übertragen. Die Ladeaufträge werden in einer Ladeauftragsverwaltung 18 abgelegt und verwaltet. Dies ist in Figur 1 anhand des Ladeauftrags L₆ dargestellt. Wie bereits erwähnt, ist der Ladeauftrag L₅ gerade aktiv. Der nächste abzuarbeitende Ladeauftrag L₄ soll in Abhängigkeit seines Startzeitpunktes gestartet werden, wenn der Ladeauftrag L₅ abgearbeitet ist.

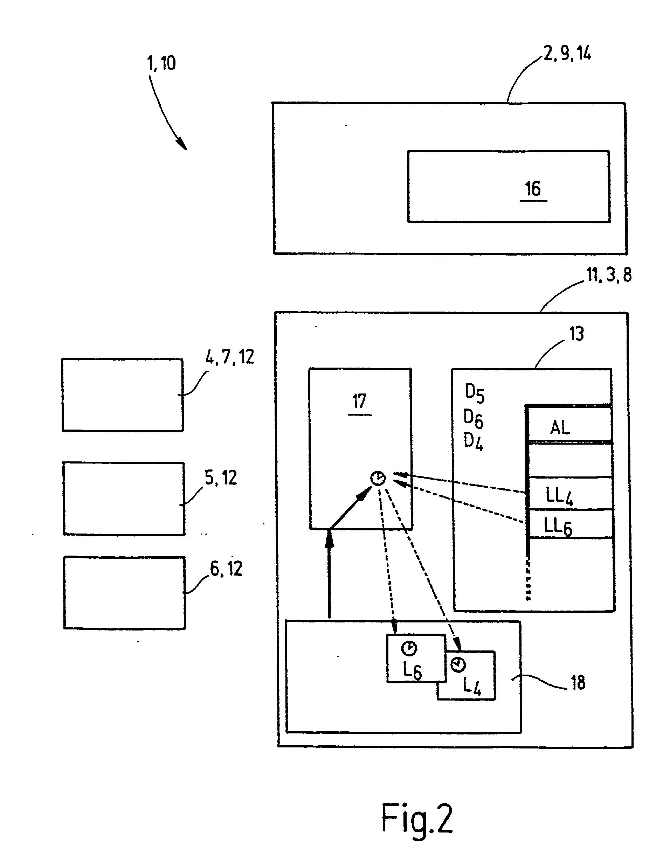

Kommt es nun nach Beendigung des Ladeauftrags L₅ zu einer Fehlfunktion, beispielsweise einem Spannungsausfall, in der Zentraleinheit 11, gehen die noch nicht ausgeführten Ladeaufträge L₆ und L₄ nicht verloren, sondern werden automatisch neu gestartet. Hierzu wertet die Auftragsausgabe 17 nach Wiederaufnahme der Spannungsversorgung die Auftragsliste AL aus und stellt fest, dass die Namen LL₄ und LL₆ der Ladelisten noch in der Auftragsliste AL zwischengespeichert sind, also noch abgearbeitet werden müssen, wie dies aus Figur 2 hervorgeht. Anschließend wird die Auftragsausgabe 17 von der Ladeauftragsverwaltung 18 initialisiert, worauf die Auftragsausgabe aus der Auftragsliste AL alle noch nicht bearbeiteten Ladeaufträge L₄ und L₆ anhand der Namen LL entnimmt und als neue Ladeaufträge L₄ und L₆ startet, so dass die zugehörigen Datenkomponenten D₄ und D₆ aus dem Speicher 13 an die zugehörigen Systemkomponenten 4 und 6 übertragen werden können. Dieser Vorgang ist beliebig oft wiederholbar, und zwar solange, bis ein Ladeauftrag L gestartet, vollständig abgearbeitet und seine Ladeliste beziehungsweise der Listenname LL aus der Auftragsliste AL entfernt worden ist. Dadurch, dass in der Auftragsliste AL die Listennamen LL einsortiert sind, können nach der Fehlfunktion die noch abzuarbeitenden Ladeaufträge L₄ bis L₆ neu gestartet werden. Hierzu entnimmt beispielsweise die Auftragsausgabe 17 oder die Ladeauftragsverwaltung 18 den Listennamen und fordert die zugehörige Ladeliste beim Service-PC 14 an. Diese wird dann erneut an die Zentraleinheit 11 übermittelt, so dass der zugehörige Ladeauftrag L ausgeführt werden kann.

Es bieten sich also mit dem erfindungsgemäßen Verfahren folgende Vorteile: Der Service-PC 14 muss nach einer Fehlfunktion der Zentraleinheit 11 nicht nochmals alle Ladeaufträge neu starten, sondern nur die, die noch nicht abgearbeitet sind. Ferner entfallen mühsame Aufräumarbeiten in dem Speicher 13, der vorzugsweise als Festplatte ausgebildet ist, wobei derartige Aufräumarbeiten, beispielsweise Entfernen beziehungsweise Löschen, nicht mehr benötigter Ladelisten oder nicht mehr benötigter Protokolldateien sind. Außerdem entfallen mit dem erfindungsgemäßen Verfahren lange Wartezeiten der Ungewissheit, ob ein Ladeauftrag startet oder nicht.

## Patentansprüche

1. Verfahren zur Abarbeitung eines Daten-Ladeauftrags in einem Daten ver- und/oder bearbeitenden System (1), welches in einem Netzwerk arbeitet, das zumindest drei Netzelemente (3,4,5,6,9) enthält, wobei das erste Netzelement (4,5,6) das Ziel des Ladeauftrags (L4,L5,L6) ist, wobei in dem zweiten Netzelement (8) die Ladeauftragsverwaltung (18) und die Auftragsausgabe (17) erfolgt, und durch das zweite Netzelement (3) die Abarbeitung anhand einer Ladeliste (LL4, LL5, LL6) erfolgt, die zumindest das Ziel (4, 5, 6) des Ladeauftrags und die zu ladende Datenkomponente enthält, wobei durch das dritte Netzelement (9) die Ladeliste (LL4, LL5, LL6) erstellt und die Ladeliste (LL4,LL5,LL6) vom dritten Netzelement (9) zum zweiten Netzelement (8) übertragen wird, wobei während oder vor der Abarbeitung des Daten-Ladeauftrags (L4,L5,L6) vom zweiten Netzelement (8) die Ladeliste (LL4, LL5, LL6) in einer Auftragsliste (AL) in einem nicht flüchtigen Speicher (13) in dem zweiten Netzelement (8) gespeichert und erst nach vollständiger Abarbeitung des Ladeauftrags (L4,L5,L6) aus der Auftragsliste (AL) entfernt wird,
**dadurch gekennzeichnet, dass**
die Ladeliste (LL4,LL5,LL6) einen Startzeitpunkt für den Ladeauftrag (L4,L5,L6) enthält und der jeweils nächste abzuarbeitende Ladeauftrag (L4, L5, L6) in Abhängigkeit seines Startzeitpunktes gestartet wird, wenn der jeweils vorherige Ladeauftrag (L4, L5, L6) abgearbeitet ist.

2. Verfahren nach Anspruch 1, **dadurch gekennzeichnet, dass** für die Ladeliste ein Listenname (LL4,LL5,LL6) vergeben wird, der in der Auftragsliste (AL) zwischengespeichert wird.

3. Verfahren nach Anspruch 1 oder 2, **dadurch gekennzeichnet, dass** der Ladeauftrag (L₄,L₅,L₆) so oft automatisch abgearbeitet beziehungsweise gestartet wird, bis er einmal vollständig ausgeführt ist.

4. Verfahren nach Anspruch 4, **dadurch gekennzeichnet, dass** die Auftragsliste (AL) mehrere abzuarbeitende Ladelisten (LL4,LL5,LL6) enthält.

5. Verfahren nach einem der vorhergehenden Ansprüche, **dadurch gekennzeichnet, dass** die Ladelisten (LL4,LL5,LL6) in Abhängigkeit ihres Startzeitpunktes in der Auftragsliste (AL) einsortiert sind.

6. Verfahren nach einem der vorhergehenden Ansprüche, **dadurch gekennzeichnet, dass** das System (1) als Telekommunikationsanlage (10) arbeitet.

7. Verfahren nach einem der vorhergehenden Ansprüche, **dadurch gekennzeichnet, dass** die Ladeauftragsverwaltung (18) der Auftragsausgabe (17) die abzuarbeitende Ladeliste (LL₄,LL₅,LL₆) zuweist, dass die Auftragsausgabe (17) nach vollständiger Abarbeitung dies der Ladeauftragsverwaltung (18) zurückmeldet und dass die Ladeauftragsverwaltung (18) die abgearbeitete Ladeliste (LL4,LL5,LL6) aus der Auftragsliste (AL) entfernt.

## Claims

1. Method for processing a data loading job in a data processing system (1) which functions in a network which contains at least three network elements (3, 4, 5, 6, 9), the first network element (4, 5, 6) being the target of the loading job (L4, L5, L6), the loading job management (18) and the job output (17) taking place in the second network element (8), and the processing taking place by means of the second network element (3) on the basis of a loading list (LL4, LL5, LL6) which contains at least the target (4, 5, 6) of the loading job and the data components to be loaded, the loading list (LL4, LL5, LL6) being created by the third network element (9) and the loading list (LL4, LL5, LL6) being transmitted from the third network element (9) to the second network element (8), the loading list (LL4, LL5, LL6) being stored, during or before the processing of the data loading job (L4, L5, L6), by the second network element (8) in a job list (AL) in a non-volatile memory (13) in the second network element (8), and only being removed from the job list (AL) after complete processing of the loading job (L4, L5, L6),
**characterised in that**
the loading list (LL4, LL5, LL6) contains a starting moment for the loading job (L4, L5, L6) and the respective loading job (L4, L5, L6) which is to be processed subsequently is started according to the starting moment thereof, when the respective preceding loading job (L4, L5, L6) has been processed.

2. Method according to claim 1, **characterised in that** a list name (LL4, LL5, LL6) is allocated to the loading list and stored temporarily in the job list (AL).

3. Method according to either claim 1 or claim 2, **characterised in that** the loading job (L4, L5, L6) is automatically processed and started repeatedly until it has been completely executed once.

4. Method according to claim 4, **characterised in that** the job list (AL) contains a plurality of loading lists (LL4, LL5, LL6) to be processed.

5. Method according to any of the preceding claims, **characterised in that** the loading lists (LL4, LL5, LL6) are sorted in the job list (AL) according to their starting moment.

6. Method according to any of the preceding claims, **characterised in that** the system (1) functions as a telecommunications system (10).

7. Method according to any of the preceding claims, **characterised in that** the loading job management (18) of the job output (17) assigns the loading list (LL4, LL5, LL6) to be processed, **in that** the job output (17) reports back to the loading job management (18) after said processing is complete, and **in that** the loading job management (18) removes the processed loading list (LL4, LL5, LL6) from the job list (AL).

## Revendications

1. Procédé de traitement d'une commande de chargement de données dans un système de traitement de données (1) qui fonctionne dans un réseau qui contient au moins trois éléments de réseau (3, 4, 5, 6, 9), le premier élément de réseau (4, 5, 6) étant la cible de la commande de chargement (L4, L5, L6), la gestion de la commande de chargement (18) et la sortie de la commande (17) s'effectuant dans le deuxième élément de réseau (8), le traitement étant effectué par le deuxième élément de réseau (3) à l'aide d'une liste de chargement (LL4, LL5, LL6) qui contient au moins la cible (4, 5, 6) de la commande de chargement et la composante de données à charger, le troisième élément de réseau (9) établissant la liste de chargement (LL4, LL5, LL6) et la liste de chargement (LL4, LL5, LL6) étant transmise du troisième élément de réseau (9) au deuxième élément de réseau (8), la liste de chargement (LL4, LL5, LL6) étant, pendant ou avant le traitement de la commande de chargement de données (L4, L5, L6), enregistrée par le deuxième élément de réseau (8) dans une liste de commandes (AL) dans une mémoire (13) non volatile dans le deuxième élément de réseau (8) et n'étant enlevée de la liste de commandes (AL) qu'après le traitement complète de la commande de chargement (L4, L5, L6),
**caractérisé en ce que**
la liste de chargement (LL4, LL5, LL6) contient un instant de départ pour la commande de chargement (L4, L5, L6), et **en ce que** la commande de chargement (L4, L5, L6) qui doit respectivement être exécutée immédiatement après est lancé en fonction de son instant de départ quand la commande de chargement (L4, L5, L6) respectivement précédent est traitée.

2. Procédé selon la revendication 1, **caractérisé en ce que**, pour la liste de chargement, il est attribué un nom de liste (LL4, LL5, LL6) qui est enregistré de façon intermédiaire dans la liste de commandes (AL).

3. Procédé selon la revendication 1 ou 2, **caractérisé en ce que** la commande de chargement (L4, L5, L6) est traitée ou respectivement lancée automatiquement de façon répétée jusqu'à ce qu'elle soit réalisée complètement une fois.

4. Procédé selon la revendication 4, **caractérisé en ce que** la liste de commandes (AL) contient plusieurs listes de chargement (LL4, LL5, LL6) à traiter.

5. Procédé selon une des revendications précédentes, **caractérisé en ce que** les listes de chargement (LL4, LL5, LL6) sont classées en fonction de leur instant de départ dans la liste de commandes (AL).

6. Procédé selon une des revendications précédentes, **caractérisé en ce que** le système (1) fonctionne en tant qu'installation de télécommunication (10).

7. Procédé selon une des revendications précédentes, **caractérisé en ce que** la gestion de la commande de chargement (18) de la sortie de la commande (17) attribue la liste de chargement (LL4, LL5, LL6) à traiter, **en ce que** la sortie de la commande (17), une fois achevé le traitement, en informe en retour la gestion de la commande de chargement (18), et **en ce que** la gestion de la commande de chargement (18) enlève de la liste de commandes (AL) la liste de chargement (LL4, LL5, LL6) traitée.
